# EUROPÄISCHE PATENTSCHRIFT

(11) **EP 3 543 420 B1**
(45) Veröffentlichungstag und Bekanntmachung des Hinweises auf die Patenterteilung: **20.10.2021**
(21) Anmeldenummer: 18162972.6
(22) Anmeldetag: 20.03.2018
(51) Int. Cl.: E04F 11/18, F21V 33/00, F21V 8/00

(54) **PROFILSYSTEM MIT EINER LEUCHTMITTEL-AUFNAHMESCHIENE**
PROFILE SYSTEM WITH A LIGHT HOLDING RAIL
SYSTÈME DE PROFILÉ POURVU DE RAIL DE RÉCEPTION DE MOYEN D'ÉCLAIRAGE

(43) Veröffentlichungstag der Anmeldung: 25.09.2019
(73) Patentinhaber: Bangratz, René, 74076 Heilbronn (DE)
(72) Erfinder: Bangratz, René, 74076 Heilbronn (DE)
(74) Vertreter: Wimmer, Stephan

(56) Entgegenhaltungen:
- EP-A1- 2 905 395
- DE-A1-102011 056 874
- DE-U1- 29 903 653
- DE-U1-202006 016 860
- DE-U1-202010 016 185
- DE-U1-202011 004 361
- FR-A1- 2 978 525
- US-A1- 2010 290 214

## Beschreibung

Die Erfindung betrifft ein Profilsystem mit einer Leuchtmittel-Aufnahmeschiene.

### Stand der Technik

Bekannt sind verschiedene Beleuchtungsmöglichkeiten von Vorrichtungen wie Handläufen, Geländerelementen, Vordächern o.dgl. im Innen- oder Außenbereich von Gebäuden.

Aus der DE 103 53 523 A1 ist ein Geländerelement mit Beleuchtung in Form eines Handlaufs bekannt. Nach der dortigen Aufgabenstellung soll ein Geländer bzw. ein Handlauf geschaffen werden, mit dem eine verbesserte Sicherheit seitens der Nutzung auch in der Dunkelheit gegeben ist. Es wird ein Geländerelement vorgeschlagen, das einen Hohlraum im Inneren und im Bereich des Hohlraums mindestens eine Aussparung aufweist. Im Hohlraum ist ein Leuchtmittel, insbesondere eine lichtemittierende Diode (LED) angeordnet, mit welchem der Hohlraum beleuchtbar ist. Durch die vorgesehende Aussparung tritt vom Leuchtmittel emittierende Strahlung auch in die Umgebung des Geländerelements aus.

Die DE 10 2005 041 333 A1 offenbart einen Leuchtelementeeinsatz für einen Beleuchtungskörper, Handlauf und Dekorelement. Dieser Leuchtelementeeinsatz ist robust gegen Feuchtigkeit, da er wasserdicht ausgebildet ist und als einbaufertiges, gekapseltes Modul ausgebildet ist. Er ist in einen Handlauf einsetzbar, wofür im Handlauf eine Aussparung eingebracht ist.

Bei einem in der CH 421 462 A beschriebenen Handlauf wird ein Oberteil aus einem Metallprofil ausgebildet. Im Oberteil ist ein lösbar befestigter Träger angeordnet. Dieser Träger nimmt mindestens eine elektrische Lichtquelle und ein am Oberteil oder am Träger lösbar befestigtes Unterteil aus durchsichtigem oder durchscheinendem Material auf. Das Metallprofil ist stranggepresst, wobei das stranggepresste Profil Rücksprünge zur Aufnahme eines Drehriegels aufweist, um den Träger für die Lichtquelle zu fixieren.

Die FR 2 978 525 A1 offenbart eine "leuchtende Mehrfachverglasung für Möbel".

Die vorliegende Offenbarung betrifft eine mehrfach beleuchtete Möbeltürverglasung, insbesondere bestehend aus einer Platte aus Mineralglas oder organischem Glas, einer Raumplatte der ersten Platte mit Umfangsmitteln, einer peripherischen Lichtquelle, die zur Bildung mindestens einer Lichtzone geführt wird, wobei sich der Quellträger in einem von Material umgebenen Gehäuse befindet und ein von Material umgebenes Gehäuse bildet, eine Umrandung bildet, insbesondere einschließlich eines Montageelements, das von einer Abdeckung bedeckt ist, wobei diese Abdeckung und der Diodenträger vom Glas abnehmbar sind.

Die Ausführungen der DE 10 2011 056 874 A1 betreffen ein "beleuchtetes Scheibenelement". Das Scheibenelement umfasst eine transparente Scheibe und einen Rahmen, wobei die Scheibe zwei parallele Flächen und eine umlaufende Kante umfasst und der Rahmen die Scheibe einrahmt und hält. In einer Fläche der Scheibe ist eine Ausnehmung angeordnet, in der ein Leuchtmittel angebracht wird. Das Leuchtmittel dient zur Abstrahlung von sichtbarem Licht in die Ebene der Scheibe.

Die DE 20 2011 004 361 U1 offenbart ein Profilsystem mit einem Rahmenprofil für ein scheibenförmiges zu beleuchtendes Element, wobei das Rahmenprofil ein lösbares Klemmprofil aufweist, wobei innerhalb des Rahmenprofils mit dem Klemmprofil eine austauschbare Leuchtmittel-Aufnahmeschiene angeordnet ist, wobei die Leuchtmittel-Aufnahmeschiene im Rahmenprofil herausnehmbar angeordnet ist, wenn das Klemmprofil vom Rahmenprofil entfernt ist.

Nachteilig an den bekannten Beleuchtungsmöglichkeiten ist, dass sowohl die Montage oder aber eine Reparatur oder ein Austausch des Leuchtmittels nur erschwert möglich ist, insbesondere bei Ausführungen, die eine Vorrichtung wie ein Glaselement aufweisen. In diesem Fall ist ein solcher Austausch in einer gemeinsamen Halterung nicht möglich.

Aufgabe der Erfindung ist es daher, eine Beleuchtungsmöglichkeit zur Verfügung zu stellen, die eine zuverlässige Halterung sowie einen einfachen Austausch des Leuchtmittels ohne Ausbau beispielsweise eines Zusatzelements wie eines Glaselements ermöglicht.

### Offenbarung der Erfindung

Erfindungsgemäß wird diese Aufgabe durch ein Profilsystem mit einer Leuchtmittel-Aufnahmeschiene, eingesetzt in einem Rahmen- mit einem Klemmprofil, gemäß des Hauptanspruchs gelöst. Vorteilhafte Ausführungen, Einzelheiten und Merkmale der Erfindung ergeben sich aus den Unteransprüchen sowie aus der nachfolgenden Beschreibung der erfindungsgemäßen Ausführungsbeispiele in Verbindung mit den zeichnerischen Darstellungen zur erfindungsgemäßen Lösung.

Offenbart wird ein Profilsystem mit einem Rahmenprofil für ein zu beleuchtendes Element, wobei das Rahmenprofil ein lösbares Klemmprofil aufweist und innerhalb des Rahmenprofils mit dem Klemmprofil eine austauschbare Leuchtmittel-Aufnahmeschiene angeordnet ist.

Die Leuchtmittel-Aufnahmeschiene oder Leuchtmittel-Konsole ist als modulare Leuchtmittel- bzw. LED-Montageleiste oder -schiene ausgebildet. Diese Leuchtmittel-Aufnahmeschiene bzw. LED-Montageleiste ist für die Anwendung im Vertikal- und Horizontalbereich geeignet. Die Leuchtmittel-Aufnahmeschiene kann insbesondere für eine Wand eines Baukörpers o.dgl. verwendet werden. Das Leuchtmittel dient der Beleuchtung beispielsweise einer Glasscheibe oder einer Kunststoffscheibe, die durchscheinend ausgebildet ist, insbesondere klar, beispielsweise als Plexiglasscheibe.

Dabei kann die Leuchtmittel-Aufnahmeschiene in ein Rahmenprofil eingestellt oder eingesetzt werden. Dies erfolgt dadurch, dass beispielsweise bei umlaufenden Rahmenbeleuchtungen das Leuchtmittel vorkonfektioniert wird und von außen in das Rahmenprofil eingeschoben wird. Soll das Leuchtmittel ausgetauscht werden, muss das zu beleuchtende Element nicht ausgebaut werden. Das zu beleuchtende Element kann beispielsweise eine Glasplatte, ein Fenster, ein Kunststoffelement, ein Dekorelement o.dgl. sein.

Das Rahmenprofil weist eine öffenbare Vorrichtung, insbesondere ein reversibel anbring- und abnehmbares bzw. lösbares Klemmprofil, das als Anschluss-Clips-Profil ausgebildet sein kann, auf. Zum Austausch des Leuchtmittels wird lediglich das Klemmprofil ausgehängt, so dass die Leuchtmittel-Aufnahmeschiene entnommen werden kann und darin die neuen Leuchtmittel eingesetzt werden können. Das Klemmprofil kann, dann, wenn die Leuchtmittel-Aufnahmeschiene für die Leuchtmittel, insbesondere für LEDs, wieder eingeschoben ist, wieder zum Verschließen eingeclipst werden.

Das Rahmenprofil wird an einem Baukörper oder einem Möbelstück, je nach gewünschter Funktion, angeordnet. Innerhalb des Rahmenprofils wird an dem Leuchtmittel-Tragelement bzw. der Leuchtmittel-Aufnahmeschiene das Leuchtmittel, insbesondere das LED-Leuchtmittel, angeordnet. Die Leuchtmittel-Aufnahmeschiene kann verschiedenartig ausgebildet sein. Sie kann beispielsweise Nasen, Vorsprünge oder Haken zur Halterung des Leuchtmittels aufweisen. Das Leuchtmittel kann auch einerseits an der Leuchtmittel-Aufnahmeschiene und andererseits an einem Vorsprung des Rahmen- oder Tragprofils in seiner Lage gehalten sein. Die Leuchtmittel-Aufnahmeschiene ist vor dem Einbringen vorab mit Leuchtmitteln bestückbar. Die Leuchtmittel in der Leuchtmittel-Aufnahmeschiene können umlaufend oder abschnittsweise in den jeweiligen Rahmen- oder Tragprofilen angeordnet werden. Die Rahmenausbildungen können so vorkonfektioniert mit den entsprechenden Leuchtmitteln ausgebildet werden. Das Rahmenprofil, in der die Leuchtmittel-Aufnahmeschiene angeordnet ist, kann insbesondere einen Einschiebling aufweisen, wobei beispielsweise Madenschrauben zur Verbindung zum Einsatz kommen können. Dadurch können die Rahmenprofile auch im Eckbereich zusammengesteckt werden.

Das Klemm- oder Abschluss-Clips-Profil ist reversibel bzw. lösbar mit dem Rahmenprofil verbindbar. Dies erfolgt insbesondere durch Anclipsen und wieder Lösen der Clips-Verbindung. Das LED-Band kann auf der Leuchtmittel-Aufnahmeschiene aufgeklebt oder eingeclipst werden.

Zur Abstützung von zu beleuchtenden Elementen, insbesondere von Glaselementen, können im Rahmen- bzw. Tragprofil insbesondere Klotzungsprofile angeordnet sein. Diese verhindern, dass beispielsweise bei einem vertikal ausgebildeten, stehenden Bauteil wie einem Ganzglasgeländer, die Glasscheibe mit dem Leuchtmittel in Berührung kommt. Die Glasscheibe wird durch den Einsatz des Klotzungsprofils gehalten und gesichert.

Einzelne derart ausgebildete Bauteile können bei langen Anlagen oder Eckausbildungen miteinander verbunden werden, so dass auch längere Konstruktionen ausgebildet werden können. Dabei können Einschub-Verbindungselemente bzw. Einschieblinge eingesetzt werden und beispielsweise eine Zusatzsicherung durch Verbindungselemente wie Madenschrauben erfolgen.

Sollen beleuchtete Bauteile, insbesondere im Außenbereich von Gebäuden, entwässert werden, kann das Rahmenprofil so ausgebildet sein, dass an einer unteren Auflagefläche unterhalb der eingespannten Glasscheibe eine einem Entwässerungskanal vergleichbare Ausbildung im Rahmenprofil ausgebildet ist. Dort kann das ggf. von außen einfließende Wasser abgeleitet werden, so dass es mit dem Beleuchtungskörper nicht in Berührung kommt.

Die erfindungsgemäße Leuchtmittel-Aufnahmeschiene hat dabei den Vorteil, dass die Beleuchtung eines über die Breiten, sowohl oben, unten oder umlaufend, gelagerten Einsatzelements mit Lastabtragung ohne Beeinträchtigung der Ausleuchtung von unten durch eine punktuelle Abstützung gegeben ist. So wird eine punktuelle Eigenlastabtragung, beispielsweise in den unteren Eckbereichen eines platten- bzw. scheibenförmigen Körpers, erzielt.

Die erfindungsgemäße Leuchtmittel-Aufnahmeschiene hat weiterhin den Vorteil, dass jederzeit das Leuchtmittel ohne den Ausbau des zu beleuchtenden Elements durch Entfernen des Abschluss-Clips-Profils und Ausziehen der Leuchtmittel-Aufnahmeschiene bzw. des LED-Tragelements ein- oder ausgebaut werden kann.

Weitere Vorteile und vorteilhafte Ausgestaltungen der Erfindung sind der nachfolgenden Figurenbeschreibung, den Zeichnungen und den Ansprüchen entnehmbar.

Nachfolgend wird ein Ausführungsbeispiel der erfindungsgemäßen Lösung anhand der beigefügten schematischen Zeichnungen näher erläutert. Es zeigt:
- Fig. 1: zeigt ein Rahmenprofil mit einer Leuchtmittel-Aufnahmeschiene,
- Fig. 2: zeigt das Rahmenprofil mit der Leuchtmittel-Aufnahmeschiene sowie einem Einschiebling,
- Fig. 3: stellt das geöffnete Rahmenprofil dar,
- Fig. 3a), 3b) und 3c): stellen das Einsetzen eines Klotzungsprofils dar,
- Fig. 4: zeigt die Leuchtmittel-Aufnahmeschiene,
- Fig. 5: stellt ein Klotzungsprofil dar,
- Fig. 6: zeigt ein Klemmprofil,
- Fig. 7: stellt den Ablauf des Einbringens des Klotzungsprofils sowie das zu schließende Klemmprofil dar,
- Fig. 8: zeigt ein Detail des in das Rahmenprofil eingeclipsten Klemmprofils ,
- Fig. 9: zeigt die Anordnung mit einem Einschieblingkanal, alle vorgenannten Darstellungen jeweils im Schnitt, und
- Fig. 10: stellt das Rahmenprofil in einer Schrägansicht leicht von oben dar.

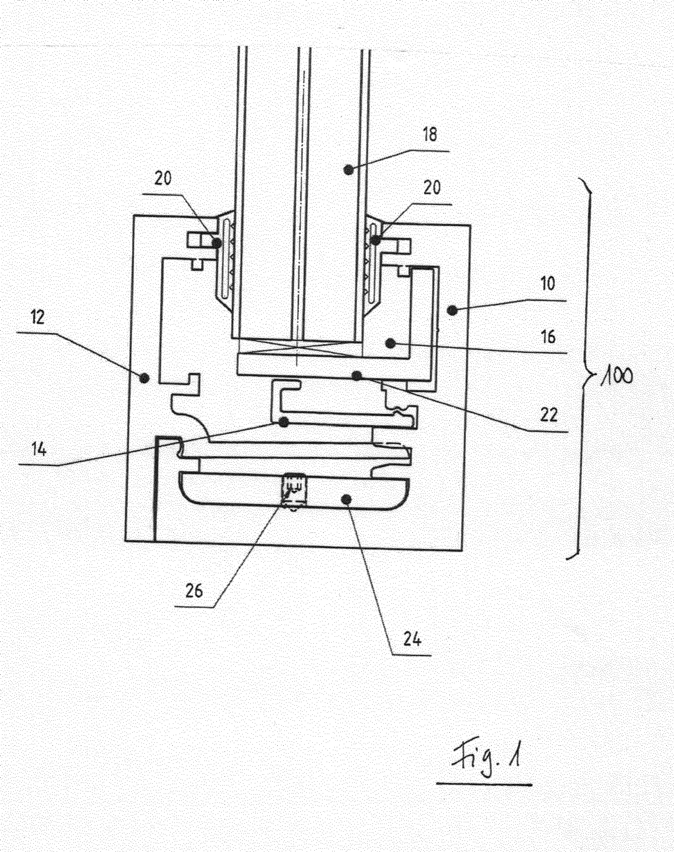

In Fig. 1 ist ein Rahmenprofil 10 dargestellt. Das Rahmenprofil 10 weist eine öffenbare bzw. aufklappbare Vorrichtung, insbesondere ein Klemmprofil 12 auf. Das Klemmprofil 12 ist als Anschluss-Clips-Profil ausgebildet und dient dem Öffnen und Schließen der gesamten Tragprofilausbildung aus Rahmenprofil 10 und Klemmprofil 12. Innerhalb des Rahmenprofils 10 ist eine Leuchtmittel-Aufnahmeschiene 14 angeordnet, die der Montage von Leuchtmitteln, insbesondere LED-Leuchten, als LED-Konsole, dient.

In einem Raum 16 ist in diesem Ausführungsbeispiel ein zu beleuchtendes Element, in diesem Ausführungsbeispiel eine senkrecht stehende Glasscheibe 18 angeordnet. Die Glasscheibe 18 ist im Rahmenprofil 10 klemmend gehalten. Die Glasscheibe 18 ist als Verbundelement mit zwei Glasscheiben sowie einer Zwischenschicht, beispielsweise aus PVB, ausgebildet. Zwischen dem oberen Abschnitt des Rahmenprofils 10 und der Glasscheibe 18 sind Druckelemente 20 ausgebildet. Die Druckelemente 20 stützen die Glasscheibe 18 und verhindern, dass diese am Rahmenprofil 10 direkt anliegt.

Zur Abstützung der Glasscheibe 18 sowie zur Sicherung gegenüber den in der Leuchtmittel-Aufnahmeschiene 14 angeordneten Leuchtmittel ist ein Klotzungsprofil 22 ausgebildet. Das Klotzungsprofil 22 verhindert, dass die eingeklemmte Glasscheibe 18 mit den Leuchtmitteln in Berührung kommt und wirkt somit als Sicherungselement. Die Glasscheibe 18 kann in Kombination mit den dargestellten Profilen auch Teil einer Fensterverglasung sein.

Im unteren, festen Bereich des Rahmenprofils 10 ist am ein Einschiebling 24 angeordnet. Der Einschiebling 24 kann beispielsweise mittels eines Sicherheitselements 26, beispielsweise einer Madenschraube 26, befestigt werden.

Die genannten einzelnen Bauteile, mindestens aber das Rahmenprofil 10, das Klemmprofil 12 und die Leuchtmittel-Aufnahmeschiene 14, bilden zusammen ein Profilsystem 100 aus. Es kann dann ergänzend das Klotzungsprofil 22 angeordnet werden.

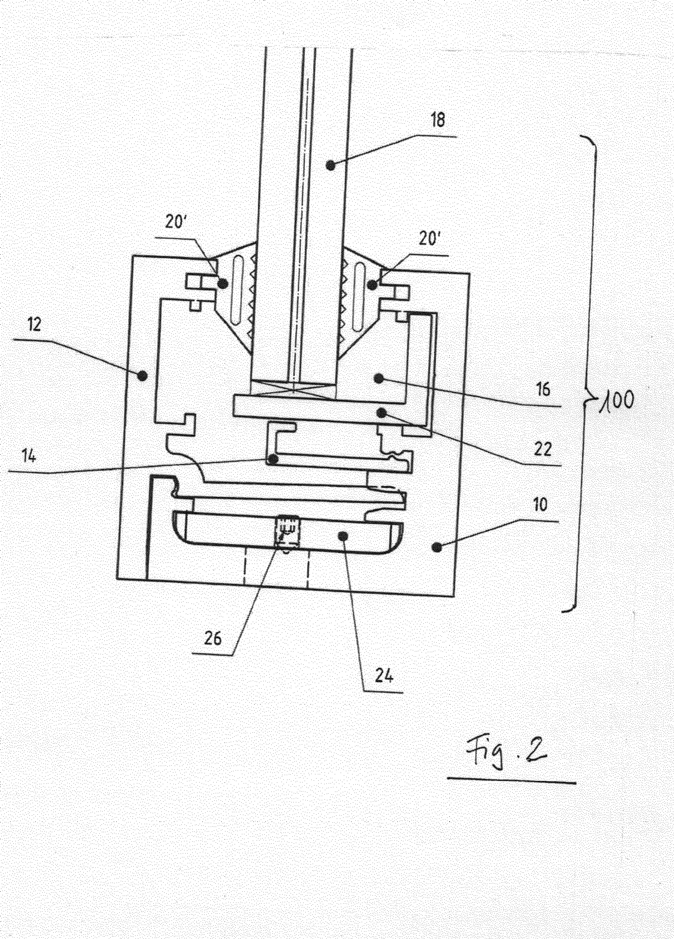

Fig. 2 zeigt eine weitere Ausführungsform, bei der die Druckelemente 20' eine andere Ausbildung aufweisen als die bei Fig. 1 dargestellten. Die Druckelemente 20' sind mit einem Hohlraum und einer Noppung ausgebildet, so dass die Glasscheibe 18 sicher gehalten ist.

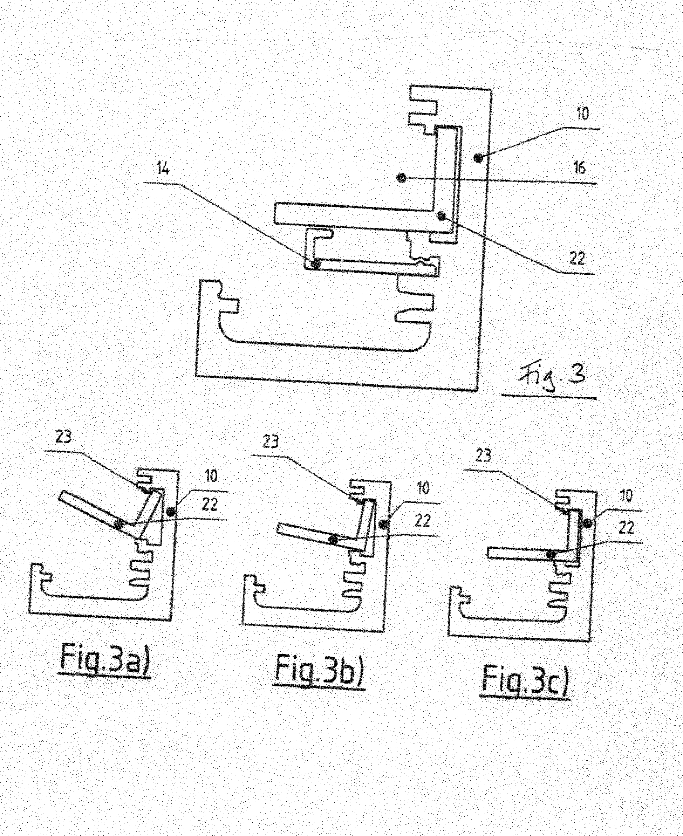

Fig. 3 zeigt das Rahmenprofil 10, wobei das in Fig. 1 und Fig. 2 dargestellte Klemmprofil 12 geöffnet bzw. ausgeclipst ist. Dies ermöglicht, dass die Leuchtmittel-Aufnahmeschiene 14 entnommen werden kann und dort Leuchtmittel ausgetauscht bzw. gewechselt werden können. Dazu ist kein Ausbau der Glasscheibe 18 mehr notwendig. Die Glasscheibe 18 ist durch das Klotzungsprofil 22 gehalten und ist somit beim Austausch- bzw. Wechselvorgang nicht beeinträchtigt. Das Klotzungsprofil 22 wird dann eingesetzt, wenn das Rahmenprofil 10 auf einem Fußboden angeordnet ist. Es ist nicht notwendig, wenn das Rahmenprofil 10 beispielsweise an einer Wand befestigt ist. Das Rahmenprofil 10 kann somit entweder auf einem Baukörper stehend aufliegen oder aber mit seiner Außenseite an einem Baukörper angeordnet werden.

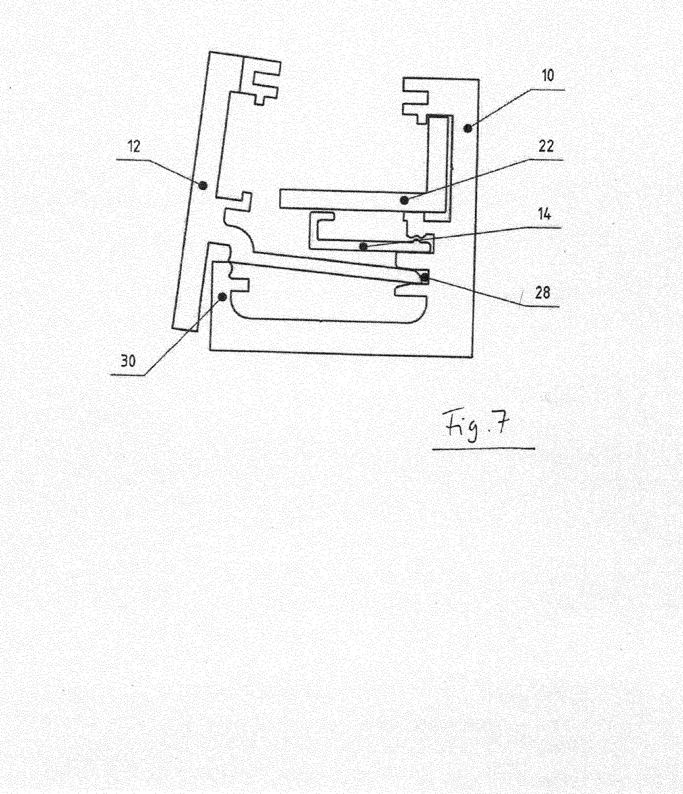

Die Leuchtmittel-Aufnahmeschiene 14 lässt sich vor dem Einclipsen des abdeckenden Klemmprofils 12 (in Fig. 7 dargestellt) von außen einschieben. Dies kann auch im Nachhinein erfolgen, wenn dazu das Klemmprofil 12 wieder durch Ausclipsen abgenommen wird. Dann kann das Leuchtmittel, das an der Leuchtmittel-Aufnahmeschiene 14 angeordnet ist, ausgetauscht werden. Dies kann unabhängig von der Lage der eingesetzten Glasscheibe 18 erfolgen. Die Leuchtmittel-Aufnahmeschiene 14 lässt sich entweder quer herausnehmen oder nach oben hin wegnehmen, je nach Anordnung des gesamten Elements.

Fig. 3a) stellt das Einhaken des Klotzungsprofils 22 in einen Haken 23 des Rahmenprofils 10.

In Fig. 3b) wird das Klotzungsprofil 22 weiter gekippt und kann dadurch in den vom Haken 23 begrenzten Raum am Rahmenprofil 10 eingeschoben werden.

Fig. 3c) stellt das in seine Position gebrachte Klotzungsprofil 22 dar.

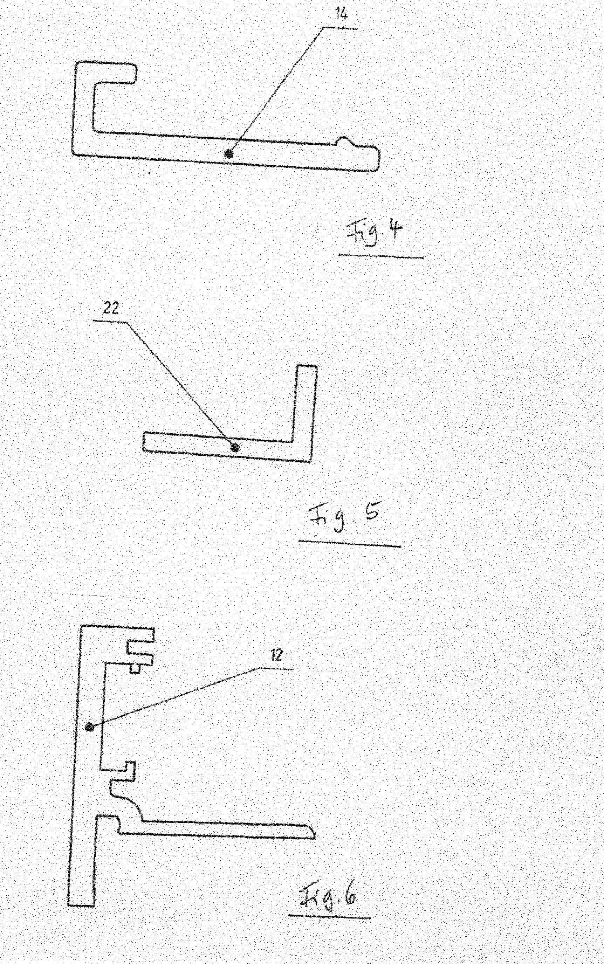

In Fig. 4 ist die Leuchtmittel-Aufnahmeschiene 14 dargestellt. Die Leuchtmittel-Aufnahmeschiene 14 ist in diesem Ausführungsbeispiel eine LED-Konsole bzw. eine Montageleiste des modular aufgebauten Gesamtsystems aus Rahmenprofil, Klemmprofil und Leuchtmittel-Aufnahmeschiene 14.

Fig. 5 stellt das Klotzungsprofil 22 dar. Das Klotzungsprofil 22 ist in diesem Ausführungsbeispiel als Aluminium-Winkel ausgebildet und so angeordnet, dass das Klotzungsprofil 22 als Sicherungselement für die oberhalb klemmend gelagerte Glasscheibe dient.

In Fig. 6 ist das Klemmprofil 12 ist als Abschluss-Clips-Profil ausgebildet und reversibel an dem Trag- bzw. Rahmenprofil angeordnet. Vorliegend ist das einzelne, abgenommene Klemmprofil 12 dargestellt.

Fig. 7 stellt die vorgenannten Bauteile bei der Zusammenfügung dar. Das Klemmprofil 12 wird in das Rahmenprofil 10 nach einsetzen der Leuchtmittel-Aufnahmeschiene 14 eingesetzt und, wie hier gezeigt, in eine Ausnehmung 28 des Rahmenprofils 10 eingeschoben. Danach wird das Klemmprofil 12 an einem Bereich des Rahmenprofils 10 mit einem Vorsprung 30 eingeclipst. Dadurch hat das Klemmprofil 12 einen festen Sitz.

Des Weiteren ist das Einsetzen des Klotzungsprofil 22 in eine entsprechend im Rahmenprofil 10 ausgebildete Ausnehmung 32 durch Einführen dargestellt. Die Fig. 7 zeigt die schrittweise Anordnung des Klotzungsprofils 22 in unterschiedlichen Winkelstellungen, bis die endgültig gewünschte Lage des Klotzungsprofils 22 erreicht ist. Nach dem Anbringen des Klotzungsprofils 22 dient dieses als Sicherungselement für ein getrennt von den in der Leuchtmittel-Aufnahmeschiene 14 anzuordnenden Leuchtmitteln einzusetzendes Element, also beispielsweise eine Glasscheibe 18 oder ein anderes Element wie ein Spiegel, ein Dekorelement o.dgl. Statt einer Glasscheibe kann auch eine Kunststoffscheibe, die durchscheinend ausgebildet ist, eingesetzt werden, beispielsweise eine Plexiglasscheibe.

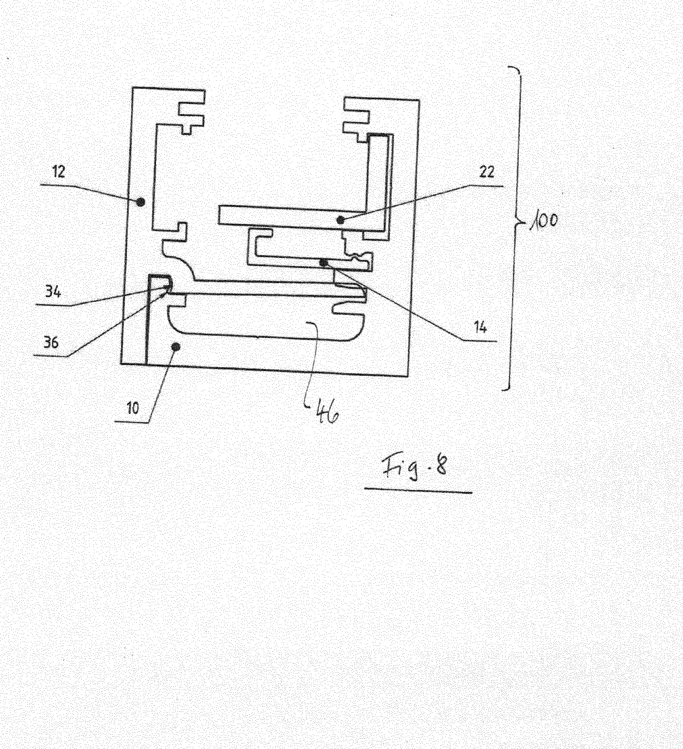

In Fig. 8 ist ein Detail des Rahmen- oder Tragprofils 10 dargestellt, das zeigt, wie eine Rastnase 34 des Klemmprofils 12 in die entsprechende Nut 36 des Rahmenprofils 10 einrastet bzw. eingeclipst wird. Dadurch kann der Bereich, der für das Einsetzen der Leuchtmittel-Aufnahmeschiene 14 benötigt wird, beispielsweise zur Montage geschlossen werden. Zum Austausch von Leuchtmitteln kann das Klemmprofil 12 wieder abgeclipst werden. Bei der Montage kann ein deutliches "Klick" beim Zusammenführen der Rastnase 34 und der Nut 36 zu hören sein.

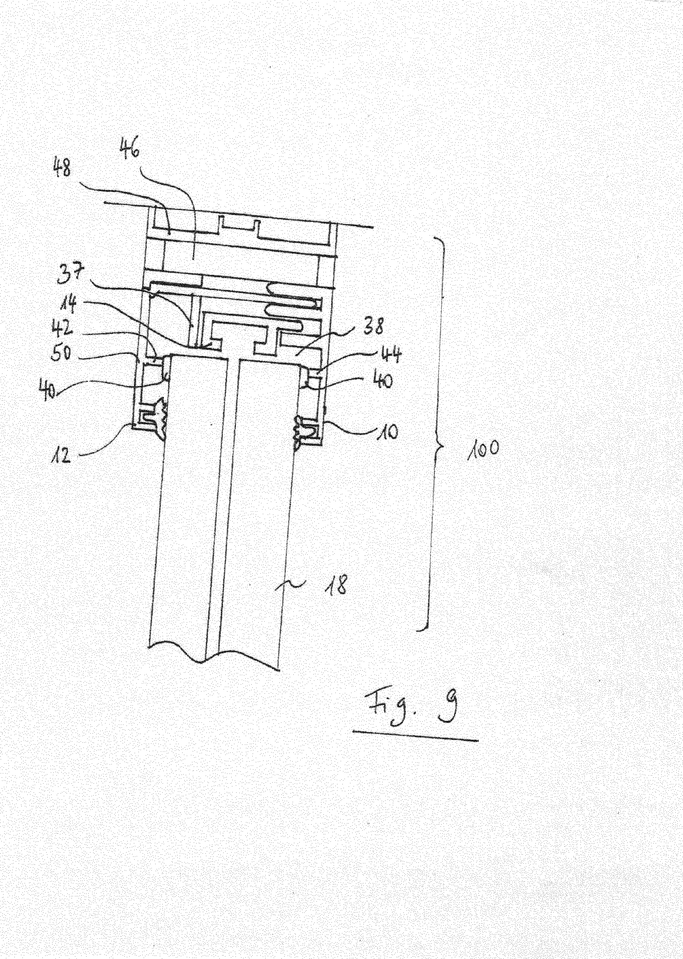

Fig. 9 zeigt eine alternative Anordnung der Glasscheibe 18, die in diesem Ausführungsbeispiel hängend bzw. mit beispielsweise an einer Decke befestigtem Rahmenprofil 10 oder auch freistehend mit einem nach oben zur Decke hin zeigendem Rahmenprofil 10 dargestellt ist. Der Raum für die Leuchtmittel-Aufnahmeschiene 14 weist ein Seitenelement 37 sowie ein weiteres Seitenelement 38 auf und ist somit von der Leuchtmittel-Aufnahmeschiene 14 getrennt. Die Glasscheibe 18 ist durch weitere Druckelemente 40, die an zwei Vorsprüngen 42, 44 angeordnet sind, gehalten. Des Weiteren ist ein Einschieblingkanal 46 für einen Einschiebling 24 ausgebildet. Es sind ein Abschluss für ein Außenprofil 48 des Rahmenprofils 10 sowie ein weiterer Abschluss 50 für ein Innenprofil, also des Klemmprofils 12, dargestellt.

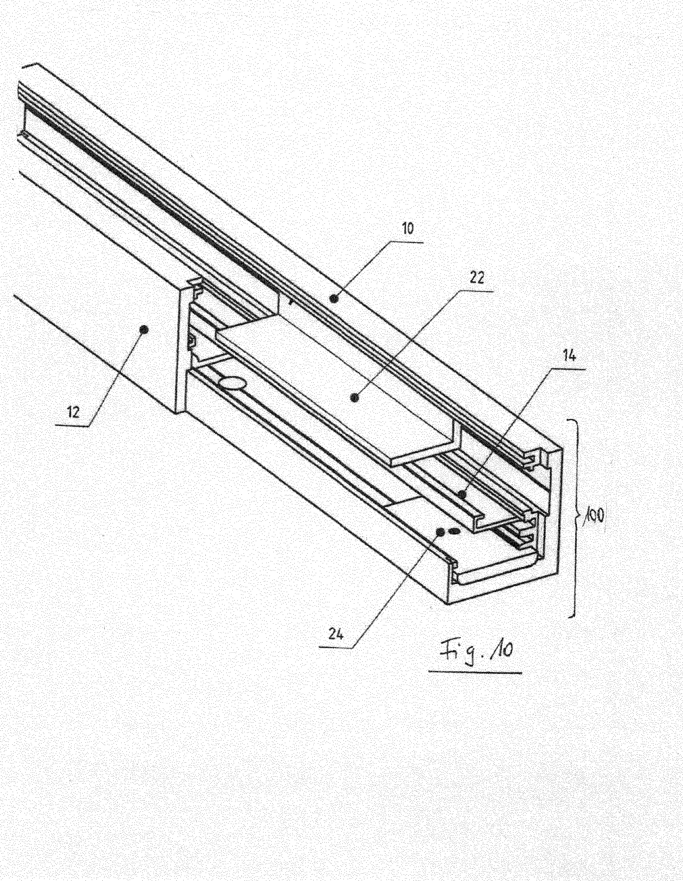

In Fig. 10 ist das Rahmenprofil 10 mit der Leuchtmittel-Aufnahmeschiene 14 in einer Schrägansicht leicht von oben verkürzt dargestellt. Es ist ein Klotzungsprofil 22 angeordnet. Das Rahmenprofil 10 mit den eingesetzten Komponenten wird mit dem einzugeclipsten Klemmprofil 12 reversibel geschlossen. Der Einschiebling 24 kann insbesondere mit einer spitzen Madenschraube 26 eingeschraubt werden.

### Bezugszeichenliste

- 10: Rahmenprofil
- 12: Klemmprofil
- 14: Leuchtmittel-Aufnahmeschiene
- 16: Raum
- 18: Glasscheibe
- 20: Druckelement
- 20': Druckelement
- 22: Klotzungsprofil
- 23: Haken
- 24: Einschiebling
- 26: Sicherungselement
- 28: Ausnehmung
- 30: Vorsprung
- 32: Ausnehmung
- 34: Rastnase
- 36: Nut
- 37: Seitenelement
- 38: Seitenelement
- 40: Druckelement
- 42: Vorsprung
- 44: Vorsprung
- 46: Einschieblingkanal
- 48: Abschluss Außenprofil
- 50: Abschluss Innenprofil

- 100: Profilsystem

## Patentansprüche

1. Profilsystem (100) mit einem Rahmenprofil (10) für ein scheibenförmiges zu beleuchtendes Element (18), wobei das Rahmenprofil (10) ein lösbares Klemmprofil (12) aufweist, welches ausgebildet ist, um das zu beleuchtende Element am Rahmen zu klemmen und wobei innerhalb des Rahmenprofils (10) mit dem Klemmprofil (12) eine austauschbare Leuchtmittel-Aufnahmeschiene (14) angeordnet ist, wobei die Leuchtmittel-Aufnahmeschiene (14) im Rahmenprofil (10) herausnehmbar angeordnet ist, wenn das Klemmprofil (12) vom Rahmenprofil (10) entfernt ist, wobei die Leuchtmittel-Aufnahmeschiene (14) ein- und ausschiebbar ausgebildet im Rahmenprofil aufgenommen ist und im Rahmenprofil (10) einrastbar gehalten ist.

2. Profilsystem (100) nach Anspruch 1, **dadurch gekennzeichnet, dass** das zu beleuchtende Element (18) eine Glasscheibe (18) oder eine durchscheinende Kunststoffscheibe ist.

3. Profilsystem (100) nach einem der vorhergehenden Ansprüche, **dadurch gekennzeichnet, dass** am Rahmenprofil (10) ein Klotzungsprofil (22) abschnittsweise so angeordnet ist, dass die Funktion der Beleuchtung nicht beeinträchtigt ist.

4. Profilsystem (100) nach Anspruch 3, **dadurch gekennzeichnet, dass** das Klotzungsprofil (22) eine Sicherungsfunktion für die Glasscheibe (18) aufweist.

5. Profilsystem (100) nach Anspruch 3 oder 4, **dadurch gekennzeichnet, dass** das Klotzungsprofil (22) zwischen der Leuchtmittel-Aufnahmeschiene (14) und dem zu beleuchtenden Element (18) angeordnet ist.

6. Profilsystem (100) nach einem der vorhergehenden Ansprüche, **dadurch gekennzeichnet, dass** das Klemmprofil (12) als Anschluss-Clips-Profil (12) ausgebildet ist.

7. Profilsystem (100) nach Anspruch 6, **dadurch gekennzeichnet, dass** das Klemmprofil (12) eine Rastnase (34) und das Rahmenprofil (10) eine Nut (36) oder umgekehrt aufweisen, so dass die Rastnase (34) in die Nut (36) lösbar eingerastet ist.

8. Profilsystem (100) nach einem der vorhergehenden Ansprüche, **dadurch gekennzeichnet, dass** die Leuchtmittel, die in der Leuchtmittel-Aufnahmeschiene (14) anordenbar sind, LED-Leuchten sind.

9. Profilsystem (100) nach einem der vorhergehenden Ansprüche, **dadurch gekennzeichnet, dass** ein Einschieblingskanal (46) ausgebildet ist.

10. Profilsystem (100) nach Anspruch 9, **dadurch gekennzeichnet, dass** im Einschieblingskanal (46) ein Einschiebling (24) angeordnet und mit einem Sicherungselement (26) gesichert ist.

11. Profilsystem (100) nach einem der vorhergehenden Ansprüche, **dadurch gekennzeichnet, dass** eine Mehrzahl von Rahmenprofilen (10) miteinander verbindbar sind, so dass in der Länge und Anordnung zueinander variierbare Ausbildungen ausführbar sind.

12. Profilsystem (100) nach Anspruch 10, **dadurch gekennzeichnet, dass** die Rahmenprofile (10) über Eck miteinander verbunden und durch die Einschieblinge (24) gesichert sind.

## Claims

1. Profile system (100) having a frame profile (10) for a plate-shaped element (18) that is to be illuminated, wherein the frame profile (10) comprises a releasable clamping profile (12), which is designed to clamp the element to be illuminated onto the frame, and wherein an interchangeable lighting means receiving rail (14) is arranged within the frame profile (10) having the frame profile (12), wherein the lighting means receiving rail (14) is removably arranged in the frame profile (10) when the clamping profile (12) is separated from the frame profile (10),
wherein the lighting means receiving rail (14) is received in the frame profile in a manner to be able to slide in and out, and is latchably retained in the frame profile (10).

2. Profile system (100) according to claim 1, **characterized in that** the element (18) to be illuminated is a glass pane (18) or a translucent plastic plate.

3. Profile system (100) according to one of the preceding claims, **characterized in that** a block profile (22) is arranged in sections on the frame profile (19) such that the illumination function is not impaired.

4. Profile system (100) according to claim 3, **characterized in that** the block profile (22) includes a securing function for the glass pane.

5. Profile system according to claim 3 or 4, **characterized in that** the block profile (22) is arranged between the lighting means receiving rail (14) and the element to be illuminated (18).

6. Profile system (100) according to one of the preceding claims, **characterized in that** the clamping profile (12) is designed as a connecting clip profile (12).

7. Profile system (100) according to claim 6, **characterized in that** the clamping profile (12) comprises a latching tab (34), and the frame profile (10) comprises a slot (36), or vice versa, so that the latching tab (34) is releasably latched in the slot (36).

8. Profile system (100) according to one of the preceding claims, **characterized in that** the lighting means that are arrangeable in the lighting means receiving rail (14) are LED lights.

9. Profile system (100) according to one of the preceding claims, **characterized in that** an insert channel (46) is formed.

10. Profile system (100) according to claim 9, **characterized in that** an insert (24) is arranged in the insert channel (46) and secured with a securing element (26).

11. Profile system (100) according to one of the preceding claims, **characterized in that** a plurality of frame profiles (10) can be connected to one another so that variable length and arrangement configurations with respect to one another are possible.

12. Profile system (100) according to claim 10, **characterized in that** the frame profiles (10) are connected to one another at the corners and are secured by means of the inserts (24).

## Revendications

1. Système de profilé (100) avec un profilé de cadre (10) pour un élément (18) en forme de vitre à éclairer, dans lequel le profilé de cadre (10) présente un profilé de serrage (12) amovible, lequel est réalisé pour serrer sur le cadre l'élément à éclairer et dans lequel un rail de logement de moyen lumineux (14) remplaçable est disposé à l'intérieur du profilé de cadre (10) avec le profilé de serrage (12), dans lequel le rail de logement de moyen lumineux (14) est disposé dans le profilé de cadre (10) de manière à pouvoir être retiré quand le profilé de serrage (12) est enlevé du profilé de cadre (10), dans lequel le rail de logement de moyen lumineux (14) est logé dans le profilé de cadre de manière à pouvoir être entré et sorti par glissement et est maintenu de manière à pouvoir être enclenché dans le profilé de cadre (10).

2. Système de profilé (100) selon la revendication 1, **caractérisé en ce que** l'élément (18) à éclairer est une vitre en verre (18) ou une vitre en matière plastique translucide.

3. Système de profilé (100) selon l'une quelconque des revendications précédentes, **caractérisé en ce qu'**un profilé de calage (22) est disposé par endroits sur le profilé de cadre (10) de telle sorte que la fonction de l'éclairage n'est pas compromise.

4. Système de profilé (100) selon la revendication 3, **caractérisé en ce que** le profilé de calage (22) présente une fonction de blocage pour la vitre en verre (18).

5. Système de profilé (100) selon la revendication 3 ou 4, **caractérisé en ce que** le profilé de calage (22) est disposé entre le rail de logement de moyen lumineux (14) et l'élément (18) à éclairer.

6. Système de profilé (100) selon l'une quelconque des revendications précédentes, **caractérisé en ce que** le profiléde serrage (12) est réalisé en tant que profilé à clips de raccordement (12).

7. Système de profilé (100) selon la revendication 6, **caractérisé en ce que** le profilé de serrage (12) présente un ergot d'enclenchement (34) et le profilé de cadre (10) présente une rainure (36), ou inversement, de telle sorte que l'ergot d'enclenchement (34) est enclenché dans la rainure (36) de manière amovible.

8. Système de profilé (100) selon l'une quelconque des revendications précédentes, **caractérisé en ce que** les moyens lumineux qui peuvent être disposés dans le rail de logement de moyen lumineux (14) sont des lampes à DEL.

9. Système de profilé (100) selon l'une quelconque des revendications précédentes, **caractérisé en ce qu'**un canal à pièce intercalaire (46) est réalisé.

10. Système de profilé (100) selon la revendication 9, **caractérisé en ce qu'**une pièce intercalaire (24) est disposée dans le canal à pièce intercalaire (46) et est bloquée avec un élément de blocage (26).

11. Système de profilé (100) selon l'une quelconque des revendications précédentes, **caractérisé en ce qu'**une multitude de profilés de cadre (10) peuvent être reliés les uns aux autres de telle sorte que des réalisations variables les unes par rapport aux autres dans la longueur et dans l'agencement peuvent être exécutées.

12. Système de profilé (100) selon la revendication 10, **caractérisé en ce que** les profilés de cadre (10) sont reliés les uns aux autres par l'intermédiaire du coin et sont bloqués par les pièces intercalaires (24).
